# EUROPEAN PATENT APPLICATION

(11) **EP 1 307 048 A1**
(43) Date of publication of application: **02.05.2003**
(21) Application number: 00942453.2
(22) Date of filing: 03.07.2000
(51) Int. Cl.: H04N 5/93, H04N 5/781, H04N 7/173, G11B 20/10

(54) **DIGITAL VIDEO INFORMATION APPARATUS**

(71) Applicant: FUJITSU LIMITED, Kawasaki-shi, Kanagawa 211-8588 (JP)
(72) Inventor: NAKANO, Yasuhiko, c/o Fujitsu Limited, Kawasaki-shi,Kanagawa 211-8588 (JP); KARASUDANI, Akira, c/o Fujitsu Limited, Kanagawa-shi, Kanagawa 21-8588 (JP)
(74) Representative: Hitching, Peter Matthew
(86) International application number: JP0004412
(87) International publication number: WO02003690

(57) **Abstract**

A delivery server comprises image contents and informational data about the image contents in its storage device. From a video recorder being a client, a request to deliver image contents that a user of the video recorder desires is issued to the delivery server. At this time, the user transmits informational data about the image contents to the delivery server. The delivery server searches for the image contents of the server itself based on the informational data transmitted from the video recorder, and delivers the image contents that the user of the video recorder desires to the video recorder.

## Description

### Technical Field

The present invention relates to a digital image information device.

### Background Art

Recently, the utilization of a device that handles digital contents not only for professional use but also for consumer use, such as a storage device that handles a digital image, a set-top box, a digital camera, etc. has rapidly accelerated.

Conventionally, it was said that the editing of an image with MPEG encoding is difficult due to a large calculation amount and an algorithm. However, because of the recent speedup of CPUs, also software enables image editing to some extent, and the utilization field has been further becoming wider. Furthermore, recently, a home video has started to be digitized, and there are expectations for the use also in this field.

To begin with, a conventional analog video recorder only shoots an image, and does not perform editing such as cut-and-paste, etc. for the image. Such image editing was performed only in very limited places such as a television station, a studio, etc. The reason is that editing operations themselves are complex, and cannot be implemented by ordinary home equipment.

Lately, there has been a tendency to digitize a video recorder, and several companies have released digital video recorders. With these recorders, image editing can be easily performed. However, a recorded image, an edited image, index information, etc. make sense only when the image is reproduced by a local recorder. Namely, the image cannot be reproduced by a different machine, or cannot be reused by being ported to a personal computer.

In the meantime, recently, digital video recorders have been becoming very helpful when an electronic program guide (EPG) is delivered along with an image and the image is recorded for a conventional TV or CATV.

However, for the EPG, the same information is only delivered in succession at predetermined intervals, and the delivered contents cannot be changed according to user preferences under the present circumstances. Namely, there is no linkage among such a program information, editing, index, etc., and the program information, etc. are difficult to be reused.

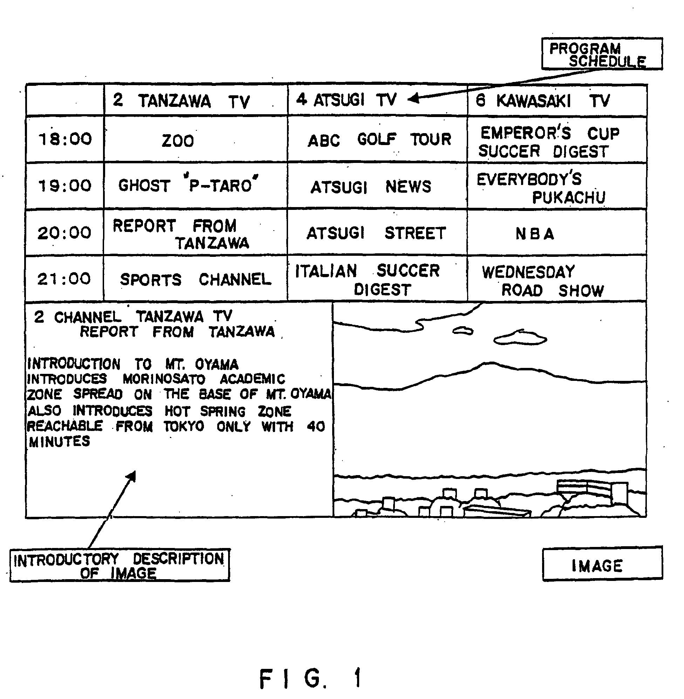

Fig. 1 exemplifies a display of an electronic program guide (EPG) of a conventional CATV.

As shown in Fig. 1, a program schedule is displayed on a screen. Additionally, if a user selects one of the programs on this program schedule, information about the program is displayed. In the example shown in Fig. 1, a user selects "Report from Tanzawa" by Tanzawa TV, and the image of the program is displayed in the lower right portion of Fig. 1, and an introductory description of the image is displayed in the lower left portion.

Conventional video recorders have the following problems.
(1) A recorded image, an edited image, index information, etc. make sense only if the image is reproduced by a local recorder. They cannot be reproduced by a different machine, or cannot be reused by being ported to a personal computer.
(2) For a program information, the same information is only delivered in succession at predetermined intervals, and the delivered contents cannot be changed according to user preferences.
(3) A program information, editing, and index information, etc. exist independently, and there is no linkage among them. Therefore, they are difficult to be reused.

### Disclosure of Invention

An object of the present invention is to provide a digital image information device that systematically links a program information and an editing process.

A first digital image information device according to the present invention, which is a digital image information device delivering/receiving image contents on request, comprises; an image contents storing unit storing image contents; an information item storing unit storing the content of an information item about the image contents in correspondence with the image contents; an information item receiving unit receiving the content of the information item about the image contents from a different digital image information device; an extracting unit extracting an information item corresponding to the content of the received information item and its content from the information item storing unit; and an image contents transmitting unit obtaining the image contents corresponding to the content of the extracted information item, and transmitting the obtained contents to the different digital image information device.

A second digital image information device according to the present invention, which is a digital image information device delivering/receiving image contents on request, comprises: an image contents storing unit storing image contents; an information item receiving unit transmitting the content of an information item about the image contents to a different digital image information device; and an image contents storing unit obtaining the image contents corresponding to the content of the transmitted information item from the different digital image information device, and storing the obtained contents in the image contents storing unit.

According to the present invention, an information item for describing image contents in association with image contents is arranged separately from the image contents, and the information indicating the image contents is set in the information item for each image contents, whereby image contents can be efficiently managed, and image contents that satisfies a user request can be easily searched or edited.

### Brief Description of Drawings

Fig. 1 exemplifies a display of an electronic program guide EPG of a conventional CATV;
Fig. 2 shows the concept of a preferred embodiment of the present invention;
Fig. 3 exemplifies the configuration on a video recorder (client) side;
Fig. 4 exemplifies the configuration of a delivery server;
Fig. 5 exemplifies information collected by a video recorder (on the client side);
Fig. 6 is a flowchart showing the sequence for initializing a database on the client side (video recorder);
Fig. 7 is a flowchart showing the sequence for making a change or an addition to the database on the client side;
Fig. 8 is a flowchart showing the sequence for initializing a database on a delivery server side;
Fig. 9 is a flowchart showing the sequence for making a change to the database on the delivery server side;
Fig. 10 explains a preferred embodiment when a communication between a delivery server and a client (video recorder) is made with an XML document;
Fig. 11 is a flowchart showing the sequence of a syntax analysis process of a DTD document on the delivery server side;
Fig. 12 explains an XML information exchange between clients; and
Fig. 13 explains hardware environment required by a delivery server or a client when the preferred embodiment of the present invention is implemented by software.

### Best Mode of Carrying Out the Invention

In a preferred embodiment of the present invention, a database that manages edited image information is generated based on the assumption that a recorded image is edited. Furthermore, also additional information such a program information, etc., which is simultaneously transmitted along with an image, is stored in the database, so that an easier-to-use video recorder for a user is provided.

Additionally, according to the preferred embodiment of the present invention, a recorded image, an edited image, index information etc. can be reproduced by a different machine other than a local recorder, or can be reused by being ported to a personal computer, etc. Furthermore, also additional information such as a program information, etc. is stored in a database, so that a more expandable implementation is realized, the linkage among the program information, editing, etc. can be made, and the reuse of the program information, etc. can be facilitated.

A conventional video recorder is a device that simply records an image in a sense. However, according to the preferred embodiment of the present invention, a video recorder does not simply record or reproduce an image, but generates a database where configuration information such as the name of a recorded program, genre based on the contents, a person's name, time, etc. are described, special reproduction (index jump, etc.), editing (a deletion of an unnecessary portion, etc.), and the like according to user preferences can be implemented, and besides, a database that can be easily exchanged or edited with a third party is configured. For a database, a method using an EPG which is transmitted along with a TV transmission, or program information, etc. via the Internet (a TV program is used as a recording source), a method with which a default template is generated, and a user himself describes the contents of the template when recording or reproducing an image, and the like is adopted. The database is always updated or reconfigured according to user preferences (actions such as an action being recording, marking by user specification, or the like). The reconfigured database is referenced by a server which transmits an image, so that information according to the database can be provided to a user. Furthermore, the format of a database is represented by a generally used standard, for example, a structured document format such as an XML (eXtended Markup Language) format, etc., and an information exchange not only between a delivery server and a user, but also with a third party is enabled. Information of a generated database is handled along with an associated image as a pair, so that a value, which imparts a story to an image and the liking (intention) of a generator side is reflected on, can be added. If an image and a database are stored, for example, on a removable medium, they can be easily exchanged with a third party via the medium. Needless to say, data of an image and a database can be transferred and exchanged also by using a high-speed network.

Note that a document generated by using an XML is provided below as an example of a structured document. However, the present invention is not limited to this implementation. A structured document is a document the structure and the contents of which are represented by a hierarchically predetermined format.

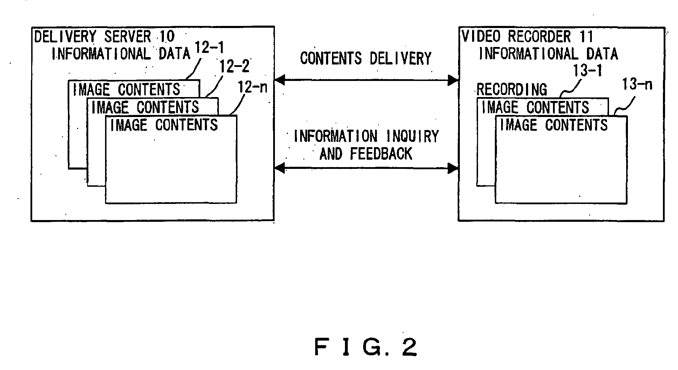

Fig. 2 shows the concept of the preferred embodiment according to the present invention.

A video recorder 11 obtains image contents, for example, from a broadcasting station, and records the image contents. At that time, the video recorder 11 simultaneously obtains informational data such as a program information, etc., and records image contents 13-1 to 13-n. At the same time, the video recorder 11 records and uses also the informational data as data indicating the image contents 13-1 to 13-n. However, data obtained from this program information does not fully meet user's needs. Therefore, the user side does not completely satisfy the obtained data. Accordingly, an inquiry about new information is made from the user side (video recorder 11). If the new information exists in the delivery server 10, it immediately delivers the information to the video recorder 11. If the new information does not exist, the user side is made to newly search for the information, and to update and feed back the information. If new information is input, new image contents 12-1 to 12-n and information, which correspond to the information, are delivered from the delivery server 10, recorded as the image contents 13-1 to 13-n, and are made available on the video recorder 11 side.

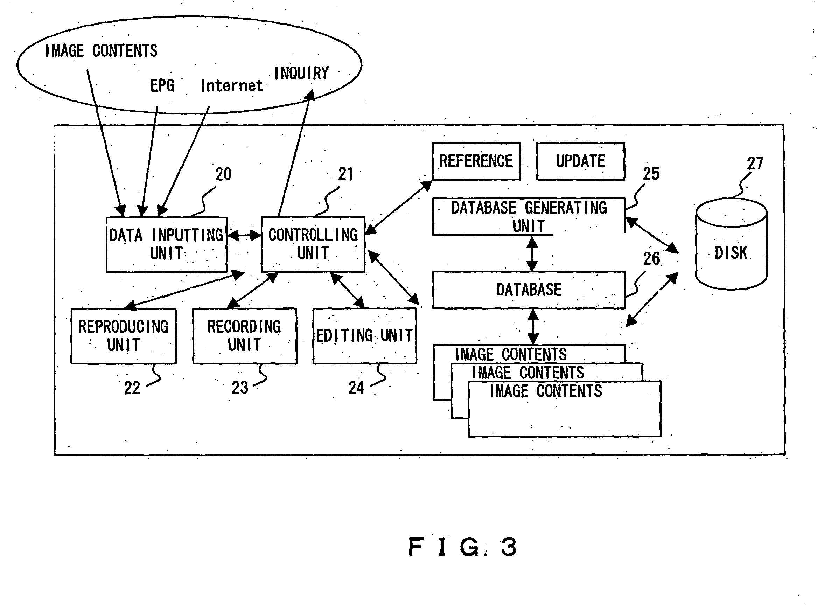

Fig. 3 exemplifies the configuration of a video recorder (client) side.

The video recorder comprises a data inputting unit 20, a controlling unit 21, a database generating unit 25, reproducing, recording, and editing units 22, 23, and 24, and the like. The video recorder generates a database 26 based on the image contents, issues an inquiry request to a delivery server side in order to meet user's needs, and updates the database 26.

Namely, the image contents and an EPG, which are transmitted from the delivery server, and information from the Internet, are input to the controlling unit 21 via the data inputting unit 20, from which the image contents, etc. are transmitted to the reproducing unit 22, the recording unit 23, or the editing unit 24. As a result, reproduction, recording, editing, etc. is performed according to a user instruction input to the controlling unit 21. Additionally, image contents recorded by the recording unit 23 are stored on a videotape, etc., whereas the image information is stored by the database generating unit 25 in the database 26 in correspondence with the image contents. The database 26 is generated while a user references and updates image contents and image information via the controlling unit 21. Data of the database 26 thus generated is stored onto a disk 27, etc., and used as a local database by the video recorder.

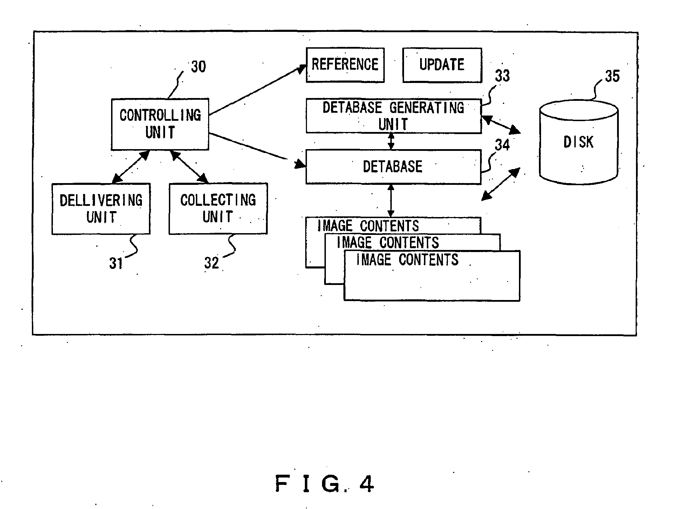

Fig. 4 exemplifies the configuration of a delivery server.

On the delivery server side, a controlling unit 30 delivers image contents or a program information via a delivering unit 31 on a request of a client side (video recorder). Additionally, if new information is requested from the client side via a collecting unit 32, information within the database 34, which is stored onto a disk 35, etc., is searched. If requested information exists, it is immediately delivered from the delivering unit 31 to the client side. If the requested information does not exist, the video recorder attempts to collect the corresponding information.

For example, the corresponding information is collected by using information that the video recorder obtains from an EPG which indicates image contents at the time of recording, information obtained from the Internet (Web search), and information input from a user.

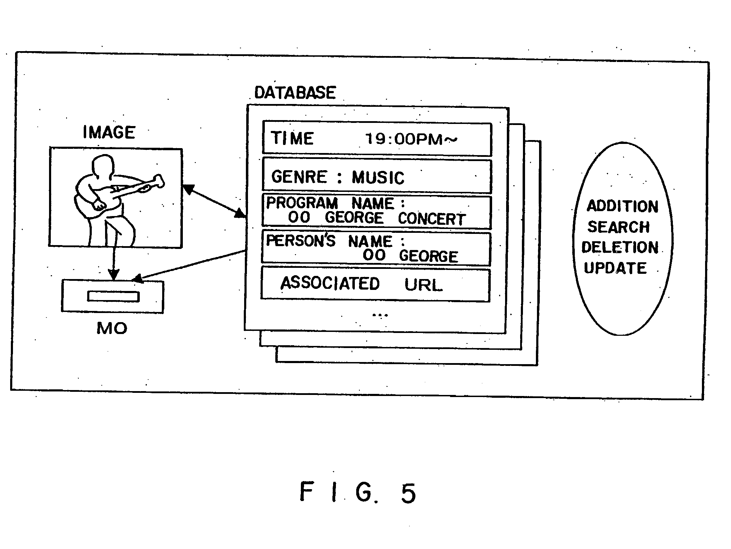

Fig. 5 exemplifies the information collected by the video recorder (client side).

In the case shown in Fig. 5, the broadcasting time, the program name, the person' s name, the associated URL, etc. of an image are stored in a database. These image contents and image information are recorded onto a storage medium such as an NO, etc. In this case, a user performs a process such as an addition, search, deletion, update, etc. for the image information.

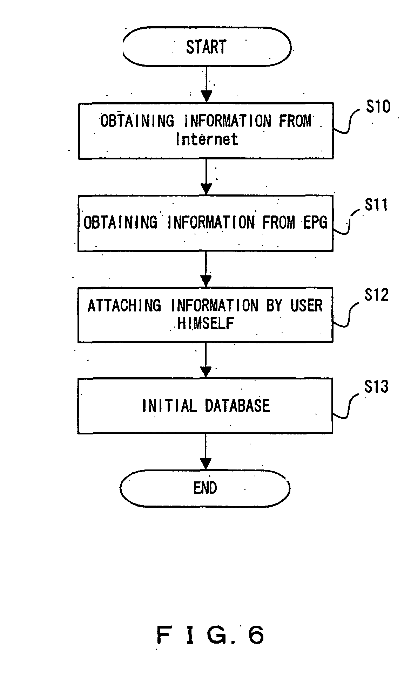

Fig. 6 is a flowchart showing the sequence for initializing a database on a client side (video recorder).

Firstly, in step S10, information from the Internet about image contents to be recorded is obtained. Next, in step S11, information obtained from an EPG that is transmitted along with the image contents is obtained. Then, in step S12, a user attaches by himself the information about the image contents that the user is to record. In step S13, these information are stored in association with the image contents, so that an initial database is generated.

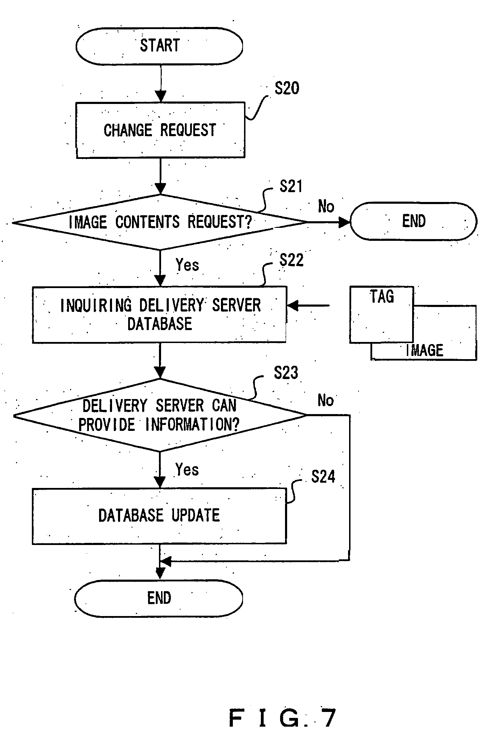

Fig. 7 is a flowchart showing the sequence for making a change or an addition to a database on a client side.

Firstly, in step S20, a user inputs a request to change a database. Then, in step S21, it is determined whether or not to request image contents of a delivery server. If the user does not request the image contents of the delivery server, the process is terminated. If the user requests the image contents of the delivery server, an image information item indicated by a particular tag among image information that is configured as a structured document written in an XML, etc., or the image itself is transmitted to the delivery server, and whether or not the image contents or information that the user desires to obtain exists in the database of the delivery server is inquired in step S22. In step S23, the delivery server determines whether or not to be able to provide the information in response to the request from the user. If the delivery server cannot provide the information, the process is terminated. If the delivery server can provide the information, it transmits the information to the client side, which then updates the database in step S24, and the process is terminated.

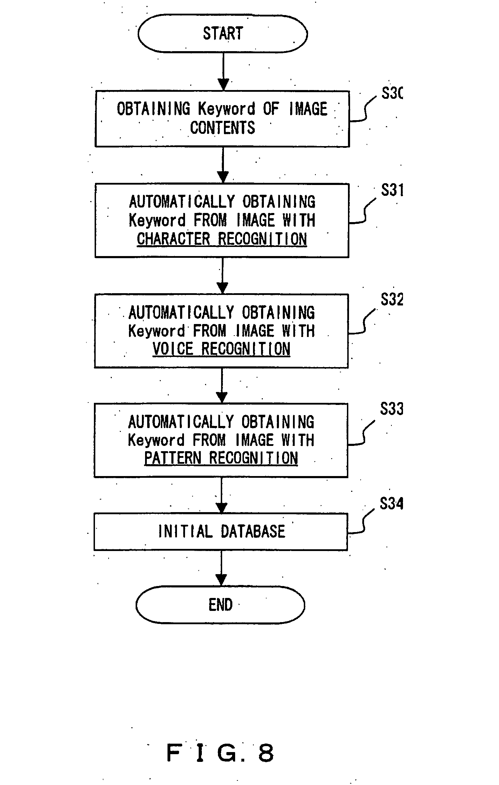

Fig. 8 is a flowchart showing the sequence for initializing a database on a delivery server side.

Firstly, in step S30, a keyword of image contents, which is input by an operator of the delivery server, is obtained. Next, in step S31, a keyword is automatically obtained from the image with character recognition. Then, in step S32, a keyword is automatically obtained from the image with voice recognition. Furthermore, in step S33, a keyword is automatically obtained from the image with pattern recognition. Then, the keywords obtained as described above are stored in the database in correspondence with the image contents. In this way, the database on the delivery server side is initialized (step S34).

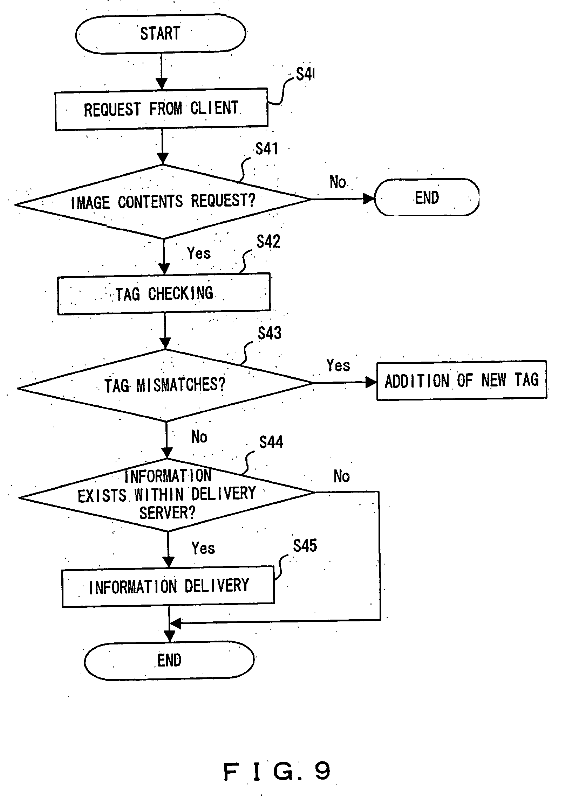

Fig. 9 is a flowchart showing the sequence for changing a database on a delivery server side.

Firstly, in step S40, a request from a client (video recorder) is received. Then, in step S41, it is determined whether or not the request is an image contents request. If the request is not the image contents request, the process is terminated. In step S41, if the request is the image contents request, the process proceeds to step S42 where an item (tag) of image information transmitted from the client is checked. In step S43, it is determined whether or not the image information item indicated by the tag matches (mismatches) an item of image information already stored as the database within the delivery server. If the tag does not match, the database within the delivery server is changed by adding the new tag. If the tag matches, it is searched in step S44 whether or not the information requested by the client exists within the delivery server. If the corresponding information does not exist within the delivery server, the process is terminated. If the corresponding information exists, this information is delivered to the client, and the process is terminated.

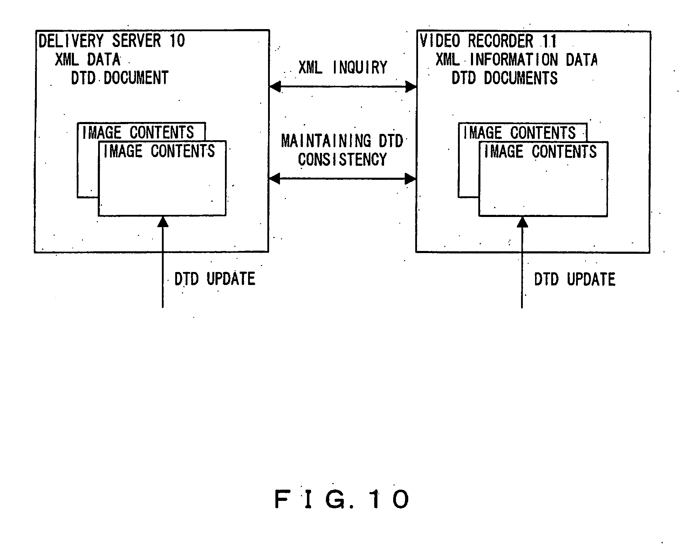

Fig. 10 explains a preferred embodiment when a communication between a delivery server and a client (video recorder) is made with an XML document.

In Fig. 10, constituent elements corresponding to those shown in Fig. 2 are denoted with the same reference numerals.

Hereinafter, the preferred embodiment where a database is updated is explained by using an XML.

An XML is used as a method utilizing a database that collects image contents. As a portion corresponding to an inquiry item in an XML inquiry, a DTD (Document Type Definition) is used. DTDs are exchanged and their definitions are made to match, so that image contents desired to be extracted are indicated.

As for a program information, by way of example, the following items are defined with a DTD as a database on the delivery server 10 side.

Example of information (DTD) on the delivery server side

The following items are considered as image information.
image = a program, the name of a person who records an image, recording time, contents
recording time = start time, end time
program = a program name, genre, broadcasting date, summary, contact destination
contact destination = an address, a telephone number (direct-dial/main/facsimile/cellular phone)
address = postal code, prefecture, city, a house number

If the above described items are written as a DTD statement, the statement becomes as follows.

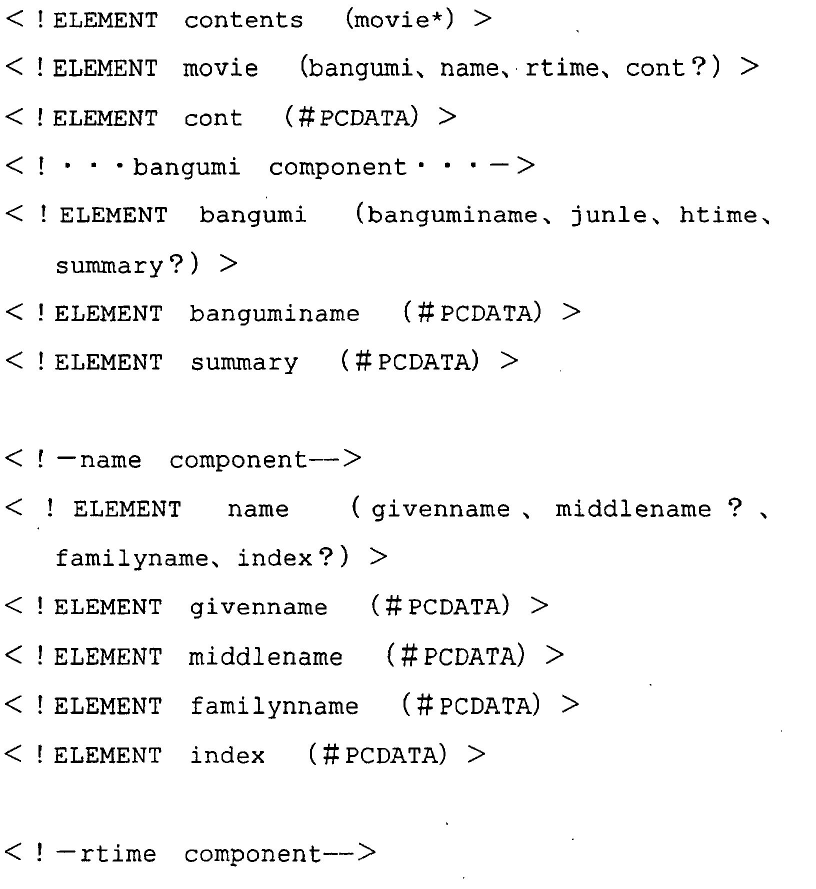

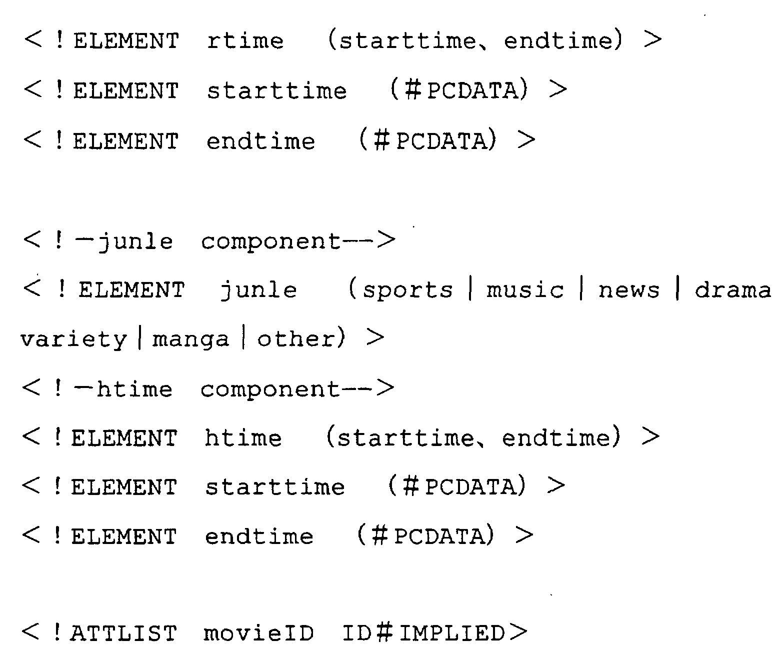

Here, assume that the database is updated on the client side as follows on a request of a user, so that items such an URL, etc. suit the preferences of the user (expanded items are underlined) . Here, it may be distinguished whether a tag is made local for the client or global for being fed back to the server. For this distinguishment, byway of example, it is defined that a required attribute which indicates whether a tag is either local or global is attached to a movie ID in an ELEMENT definition of the tag, and the tag is made local if this required attribute is "1".

Example of self-made type information that are newly added and expanded
image = a program, self-made, name, recording time, contents, URL
program = program name, genre, broadcasting date, starring, summary, index
index = start time, end time, tag, ID
starring = star, costar

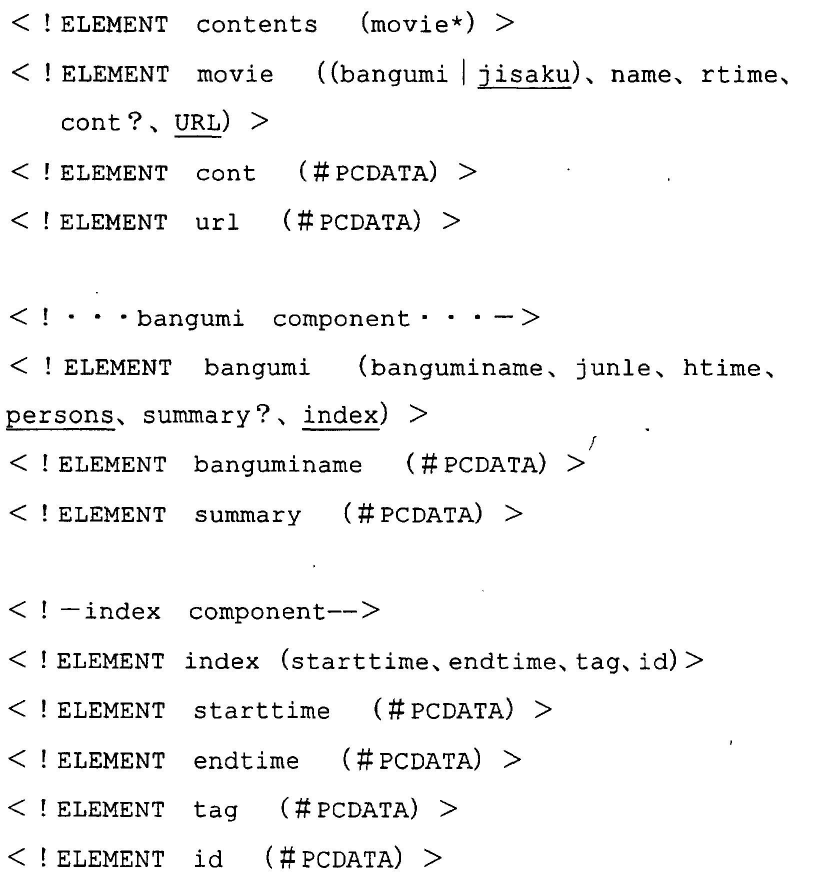

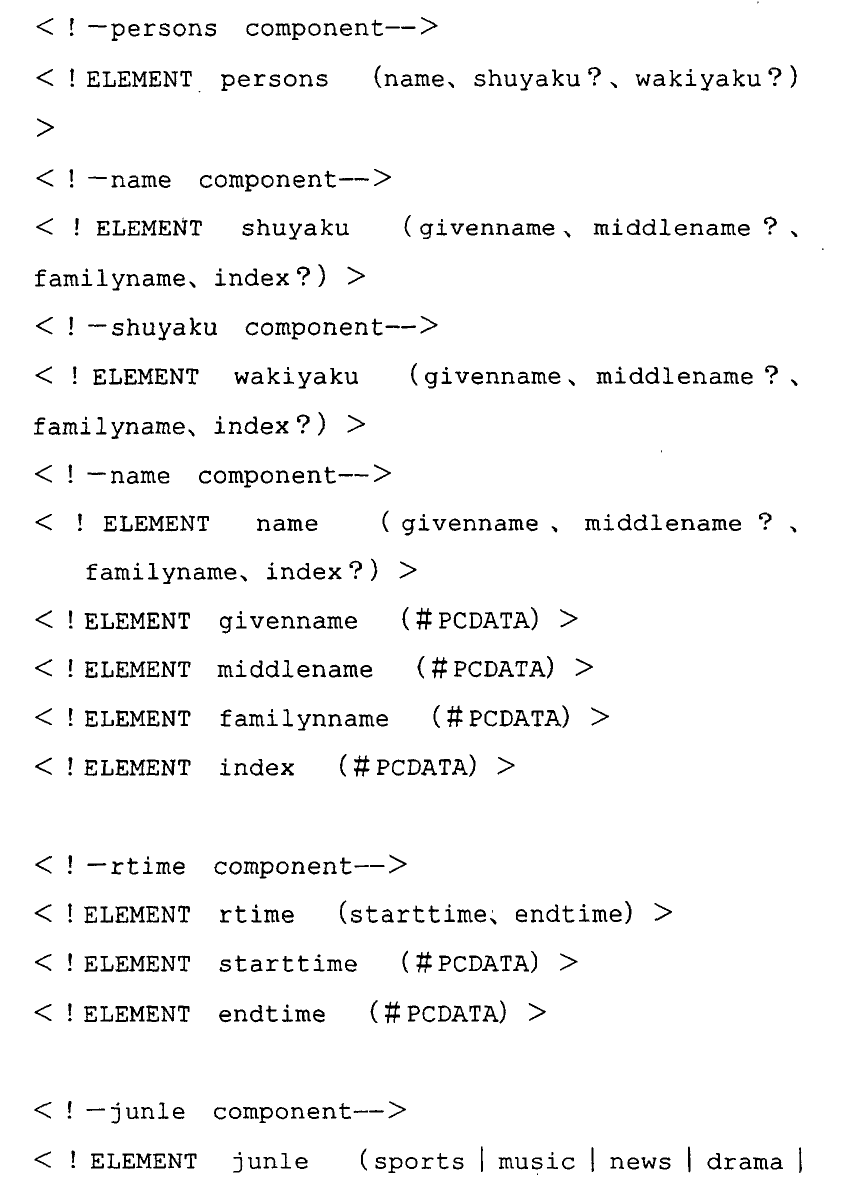

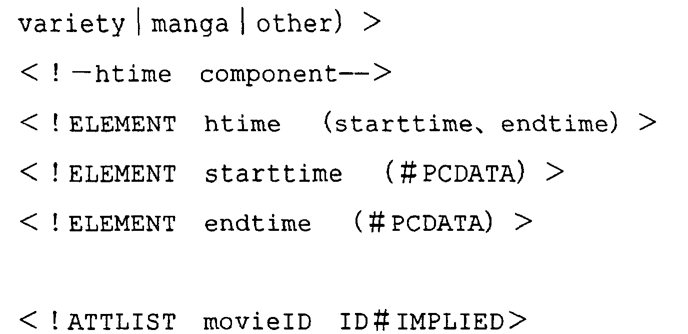

Assuming that the following XML inquiry is transmitted from the client side to the delivery server in the case where the above described DTD definitions on the delivery server and client sides exist, 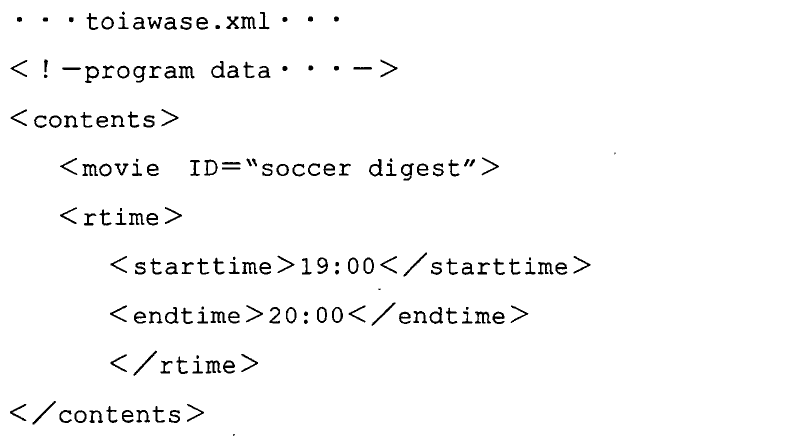 toiawase.xml is transmitted to the delivery server side, which is made to transmit the image contents corresponding to the item. If the type checking fails, a new type is synchronized with that on the client side, and that type is newly registered also on the delivery server side. Then, image contents are searched based on the item, and delivered as soon as the contents are found on the client side. In this case, an image of the soccer digest starting from 19:00 is transmitted to the client side.

Here, assume that the following inquiry mail is transmitted.

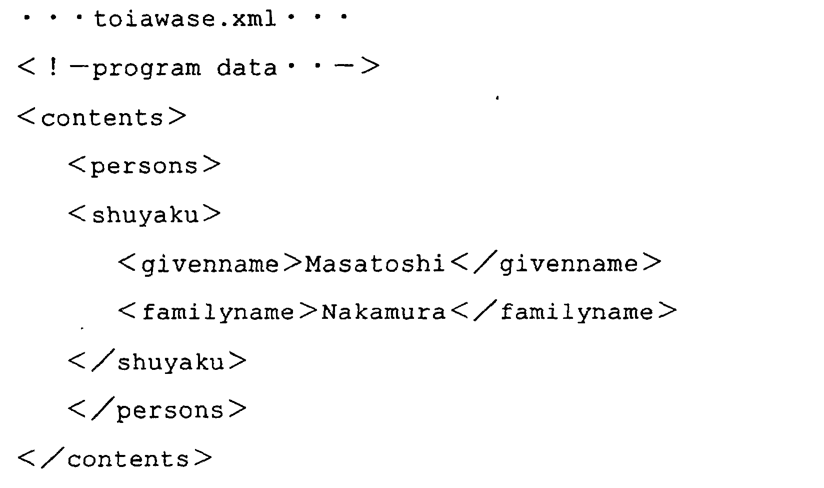

If this inquiry data is transmitted to the delivery server, there is no tag named "persons" in the DTD document on the delivery server side. Therefore, the tag is newly registered. Thereafter, whether or not "Masatoshi Nakamura" exists in the image contents is examined by making a keyword search. If "Masatoshi Nakamura" is found, it is newly added to the image contents as the data of the tag named "persons", and the database update is terminated. Additionally, the found image contents are delivered to the client side.

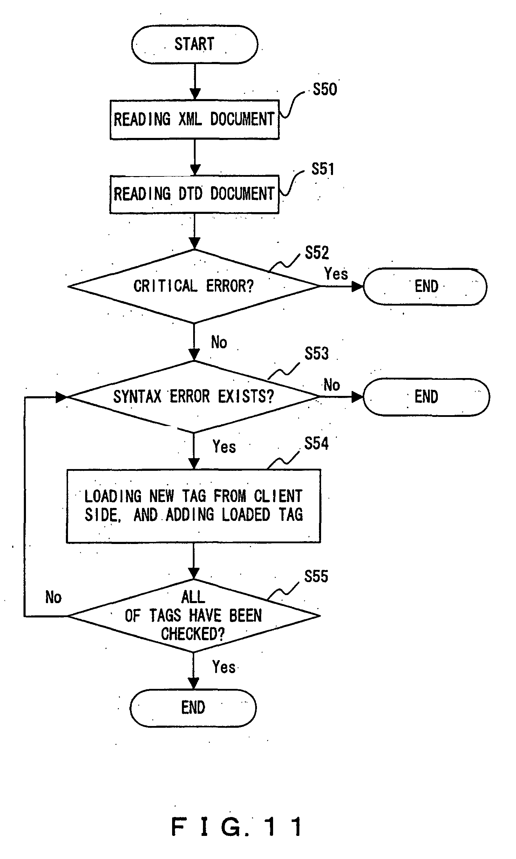

Fig. 11 is a flowchart showing the sequence of a syntax analysis process of a DTD document on a delivery server side.

Firstly, in step S50, an XML document is read. In step S51, a DTD document is read. Then, in step S52, it is determined whether or not a critical error exists in the DTD document. If a critical error is determined to exist as a result of this determination, it is recognized that information cannot be obtained from the DTD document, and the process is terminated. If a critical error is determined not to exist in the DTD document in step S52, it is determined in step S53 whether or not a syntax error exists in the DTD document. If a syntax error exists, it is determined that information cannot be properly obtained from the DTD document, and the process is terminated. If a syntax error is determined not to exist in step S53, a new tag is loaded from the client side and added to image information in step S54. Then, in step S55, it is determined whether or not all of tags have been checked. If a tag yet to be checked exists, the process goes back to step S53, and the operations are repeated. If it is determined in step S55 that all of the tags have been checked, the process is terminated.

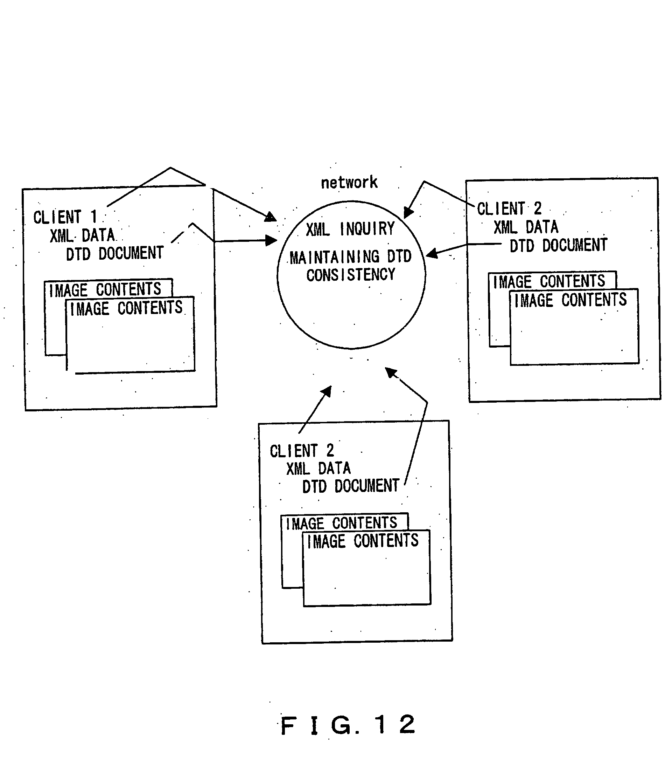

Fig. 12 explains an XML information exchange between clients.

The preferred embodiment heretofore stated is the configuration based on a relationship between a server and a client. However, there is no need to build such a hierarchy in all cases. A configuration where equal information devices such as a relationship between clients are used may be available.

Namely, DTD documents are open to one another via a network, for example, the Web, and image contents may be exchanged with another client which makes a search on the network.

In this case, clients 1 through 3 are equal with one another, and with XML DTD documents, the client 1 communicates with the clients 2 and 3, the client 2 communicates with the clients 1 and 3, and the client 3 communicates with the clients 1 and 2, so that a request to examine image contents that any of the clients 1 through 3 desires to obtain exists within a partner client is issued. If the image contents that any of the clients 1 through 3 desires to obtain exists in the partner client, the image contents are obtained via the network. If the image contents that any of the clients 1 through 3 desires to obtain does not exist, image contents are not obtained.

Each of the clients issues a DTD (a database tag) that each of the clients itself defines on the Web by using the network. A configuration required for this is the configuration on the delivery server side in Fig. 4, where an inquiry from an outside is accepted, but an update function for the inquiry is not included.

The database on the delivery server side must be updated each time a reference is made from the client side. However, if the database is updated at each time, the amount of tag information indiscriminately diverges, and tag information to be processed on the deliver server side overflows on the delivery server side, leading to a risk that the delivery server cannot possibly process the tag information. The following methods are executed to suppress divergence.
(1) A threshold value is arranged for the number of inquiries from a client, and a tag is not registered until the number exceeds the threshold value. For example, a threshold value 3 is set. A large number of references means that a use frequency is high. If the number of inquiries becomes larger than the threshold value, a tag is registered for the first time.
(2) The number of new registrations is stipulated, and the number of registrations is restricted based on the logic of discarding an earlier tag.

For example, the number of new tag registrations is set to 1000. New tags are unconditionally registered up to 1000. However, if the number of new tags exceeds 1000, a new tag is registered by deleting an earlier tag. The process performed in the case where a new tag is already registered falls into the following two types.
(a) MTF: A tag is moved to the beginning of a time series list, and defined as the latest one.
(b) Transpose: A tag in the current position in a time series list and the immediately succeeding tag are interchanged (the tag becomes newer by 1).

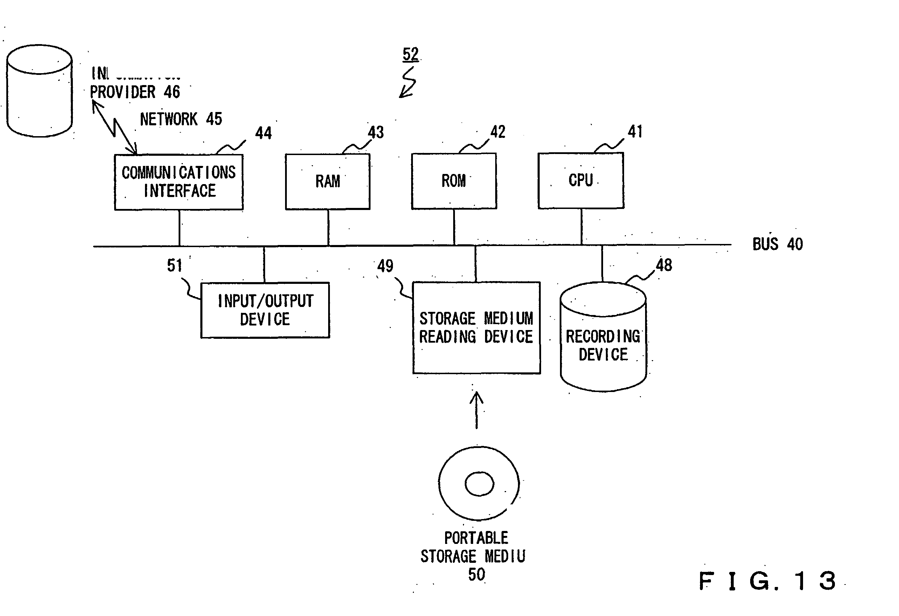

Fig. 13 explains hardware environment required by a delivery server or a client when the preferred embodiment of the present invention is implemented by software.

A CPU 41 is connected, via a bus 40, to a ROM 42, a RAM 43, a communications interface 44, a recording device 48, a storage medium reading device 49, and an input/output device 51. In the ROM 42, basic software such as BIOS, etc., which enable an input of a user instruction from the input/output device 51 or an output of a processing result of the CPU 41, when an information device 52 such as a delivery server, a client (video recorder), etc. is powered up. Here, for the delivery server, the input/output device 51 becomes a man-machine interface such as a display, a mouse, a keyboard, etc., with which a user can manage the delivery server. Meanwhile, for the client, the input/output device 51 is configured by a button for program settings, a remote controller, etc. in order to make a user input the irreducible minimum, if the information device 52 is a video recorder, etc.

The recording device 48, such as a videotape recorder, a hard disk, etc., records a program executing the processes of the preferred embodiment according to the present invention, and stores image contents or image information. Or, the program, image contents, and image information can be also stored onto a portable storage medium 50 such as a DVD, an MO, a floppy disk, etc. The CPU 41 reads the program, image contents, and image information, which are stored onto the portable storage medium 50, by using the storage medium reading device 49, and expands the read program, etc. in the RAM 43, so that the program, etc. are made available.

Furthermore, the information device 52 has the communications interface 44, communicates with the delivery server or the client via the network, and transmits/receives an XML DTD, so that image contents are downloaded or inquiry information about requested image contents are transmitted. In this case, an information provider 46 is either the delivery server or the client, or a different information device having a program implementing the preferred embodiment of the present invention. If the information provider 46 is the delivery server or the client, image contents are downloaded via the network 45, or inquiry information about image contents is transmitted as described above. However, if the information provider 46 is a different information device having the program, the program is downloaded into the information device 52, and executed to implement the system according to the preferred embodiment of the present invention. In this case, the different information device may be a delivery server or a client.

### Industrial Applicability

A recorded image, an edited image, index information, etc. can be reproduced by a machine different from a local recorder, or can be reused by being ported to a personal computer, etc. Furthermore, also additional information such as a program information, etc. is stored in a database, whereby information can be expanded, the linkage among an image, index information, etc. can be easily made, and it becomes easier to reuse the image, the index information, etc.

## Claims

1. A digital image information device delivering/receiving image contents on request, comprising:
image contents storing means for storing image contents;
information item storing means for storing a content of an information item about the image contents in correspondence with the image contents;
information item receiving means for receiving the content of the information item about the image contents from a different digital image information device;
extracting means for extracting an information item corresponding to the content of the received information item, and its content from said information item storing means; and
image contents transmitting means for obtaining the image contents corresponding to the content of the extracted information item, and for transmitting obtained image contents to the different digital image information device.

2. The digital image information device according to claim 1, wherein
said information item storing means manages/stores each information item according to a format of a structured document.

3. The digital image information device according to claim 2, wherein
the structured document is a document written in an XML, and in the format complying with a DTD of the XML.

4. The digital image information device according to claim 1, wherein
if the received information item is not registered to said information item storing means, the received information item is newly stored in correspondence with corresponding image contents.

5. The digital image information device according to claim 1, wherein
the content of the information item stored in said information item storing means is set by a user of the digital image information device.

6. The digital image information device according to claim 1, wherein
the content of the information item stored in said information item storing means is set based on a keyword that is obtained with character recognition.

7. The digital image information device according to claim 1, wherein
the content of the information item stored in said information item storing means is set based on a keyword that is obtained with voice recognition.

8. The digital image information device according to claim 1, wherein
the content of the information item stored in said information item storing means is set based on a keyword that is obtained with pattern recognition.

9. A digital image information device delivering/receiving image contents on request, comprising:
image contents storing means for storing image contents;
information item receiving means for transmitting a content of an information item about image contents to a different digital image information device;
image contents storing means for obtaining image contents corresponding to the content of the transmitted information item from the different digital image information device, and for storing obtained contents in said image contents storing means.

10. The digital image information device according to claim 9, wherein
the information item is specified according to a format of a structured document.

11. The digital image information device according to claim 10, wherein
the structured document is a document written in an XML, and in the format complying with a DTD of the XML.

12. The digital image information device according to claim 11, wherein
the information item can be expanded according to a specification of a user who requests the image contents.

13. The digital image information device according to claim 9, wherein
the content of the information item is obtained via the Internet.

14. The digital image information device according to claim 9, wherein
the content of the information item is obtained from an electronic program guide.

15. The digital image information device according to claim 9, wherein
the content of the information item is input by a user who uses the digital image information device.

16. A management method for use in a digital image information device delivering/receiving image contents on request, comprising:
an image contents storing step of storing image contents;
an information item storing step of storing a content of an information item about the image contents in correspondence with the image contents;
an information item receiving step of receiving a content of an information item about image contents from a different digital image information device;
an extracting step of extracting an information item corresponding to the content of the received information item, and its content from the content stored in the information item storing step; and
an image contents transmitting step of obtaining the image contents corresponding to the content of the extracted information item, and transmitting obtained image contents to the different digital image information device.

17. A management method for use in a digital image information device delivering/receiving image contents on request, comprising:
an image contents storing step of storing image contents;
an information item receiving step of transmitting a content of an information item about image contents to a different digital image information device; and
an image contents storing step of obtaining image contents corresponding to the content of the transmitted information item from the different digital image information device, and storing obtained image contents in the image contents storing step.

18. A storage medium, which can be read by an information device, on which is recorded a program for implementing a management method for use in a digital image information device delivering/receiving image contents to/from an information device on request, the management method comprising:
an image contents storing step of storing image contents;
an information item storing step of storing a content of an information item about the image contents in correspondence with the image contents;
an information item receiving step of receiving the content of the information item about the image contents from a different digital image information device;
an extracting step of extracting an information item corresponding to the content of the received information item, and its content from the content stored in the information item storing step; and
an image contents transmitting step of obtaining the image contents corresponding to the content of the extracted information item, and transmitting obtained image contents to the different digital image information device.

19. A storage medium, which can be read by an information device, on which is recorded a program for implementing a management method for use in a digital image information device delivering/receiving image contents to/from an information device on request, the management method comprising:
an image contents storing step of storing image contents;
an information item receiving step of transmitting a content of an information item about image contents to a different digital image information device; and
an image contents storing step of obtaining the image contents corresponding to the content of the transmitted information item from the different digital image information device, and storing obtained image contents in the image contents storing step.
